# EUROPEAN PATENT APPLICATION

(11) **EP 3 085 287 A1**
(43) Date of publication of application: **26.10.2016**
(21) Application number: 16160182.8
(22) Date of filing: 14.03.2016
(51) Int. Cl.: A47J 37/10, A47J 27/00

(54) **COOKING DEVICE**

(30) Priority: 03.04.2015 CN 201510157672
(71) Applicant: Tsann Kuen (Zhangzhou) Enterprise Co., Ltd., Fujian 363107 (CN)
(72) Inventor: PAN, Chungho, 363107 Zhangzhou Fujian (CN); LIU, Shangkun, 363107 Zhangzhou Fujian (CN)
(74) Representative: Zinkler, Franz

(57) **Abstract**

A cooking device includes a cooking unit (1) defining a cooking space (133), a water supply unit (2) including a water pipe (22) that is mounted on the cooking unit (1) and that has an outlet end (224) located in the cooking space (133), and a heating unit (3) simultaneously heating the cooking unit (1) and the water pipe (22). The outlet end (224) of the water pipe (22) is configured to spray steam into the cooking space (133) when the water pipe (22) is heated by the heating unit (3).

## Description

The disclosure relates to a cooking device, and more particularly to a cooking device that is capable of steaming, frying and grilling foods.

Referring to Figure 1, a steam grill toaster, as disclosed in Chinese Patent Publication No. CN201404105Y, includes a cooking unit 9 and a steam generating device 8. The cooking unit 9 includes a main body 91 defining a cooking space 90, and a lid body 92 removably disposed on the main body 91 to openably cover the cooking space 90. The steam generating device 8 is disposed on the lid body 92 above the cooking space 90. Water is heated by a heating tube of the steam generating device 8 into steam which is sprayed downwardly into the cooking space 90. In use, the food is first disposed on the main body 91 within the cooking space 90, after which the main body 91 is heated to grill the food. Simultaneously, steam from the steam generating device 8 is sprayed downwardly into the cooking space 90 for heating the food. Through this, the steam grill toaster can grill and steam the food at the same time.

Because the steam generating device 8 is disposed on the lid body 92 which is removably disposed on the main body 91, and cooperates with the main body 91 to heat food from above and below thereof, each of the steam generating device 8 and the main body 91 is provided with a heating unit (not shown).

However, when it is needed to put the food into or to take the food out of the cooking space 90, the lid body 91 along with the steam generating device 8 must be removed from the main body 91. If the lid body 91 is improperly handled by a user that causes the lid body 91 to fall, the steam generating device 8 may be damaged due to the impact.

Therefore, an object of the present disclosure is to provide a cooking device that can alleviate the drawback of the prior art.

According to the present disclosure, a cooking device includes a cooking unit defining a cooking space, a water supply unit including a water pipe that is mounted on the cooking unit and that has an outlet end located in the cooking space, and a heating unit mounted on the cooking unit and simultaneously heating the cooking unit and the water pipe. The outlet end of the water pipe is configured to spray steam into the cooking space when the water pipe is heated by the heating unit.

Other features and advantages of the disclosure will become apparent in the following detailed description of the embodiment with reference to the accompanying drawings, of which:

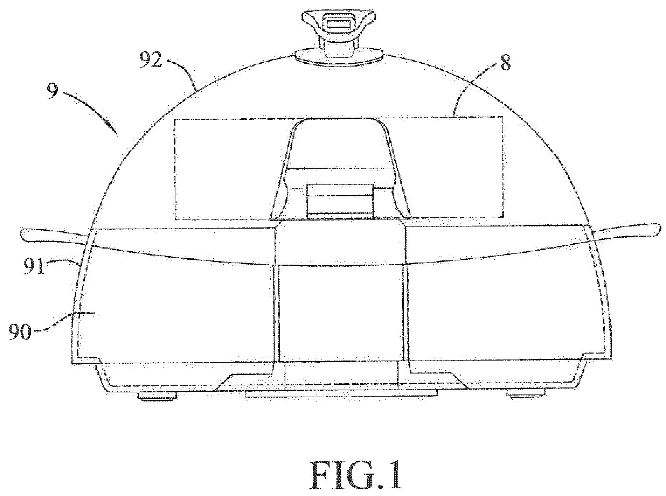

Figure 1 is a schematic side view of a steam grill toaster disclosed in Chinese Patent Publication No. CN201404105Y;
Figure 2 is an upside down perspective view of a cooking device according to an embodiment of the present disclosure, with a portion thereof removed for clarity's s sake;
Figure 3 is a bottom view of the embodiment;
Figure 4 is a sectional view of the embodiment taken along line A-A of Figure 3;
Figure 5 is a sectional view of the embodiment taken along line B-B of Figure 3;
Figure 6 illustrates an assembly relationship of a main heating tube of a main heating module and a first pipe section of a water pipe of the embodiment;
Figure 7 illustrates an assembly relationship of an auxiliary heating tube of an auxiliary heating module and a second pipe section of the water pipe of the embodiment; and
Figure 8 illustrates how the cooking device of the embodiment is used by a user.

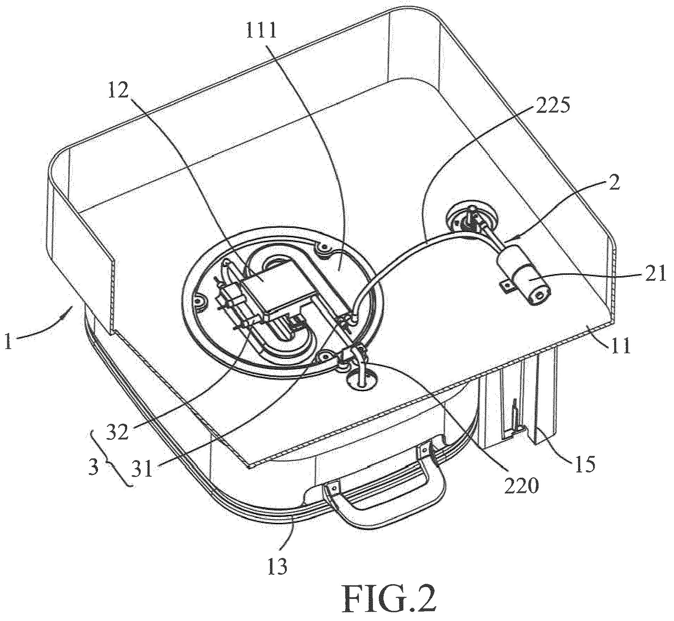

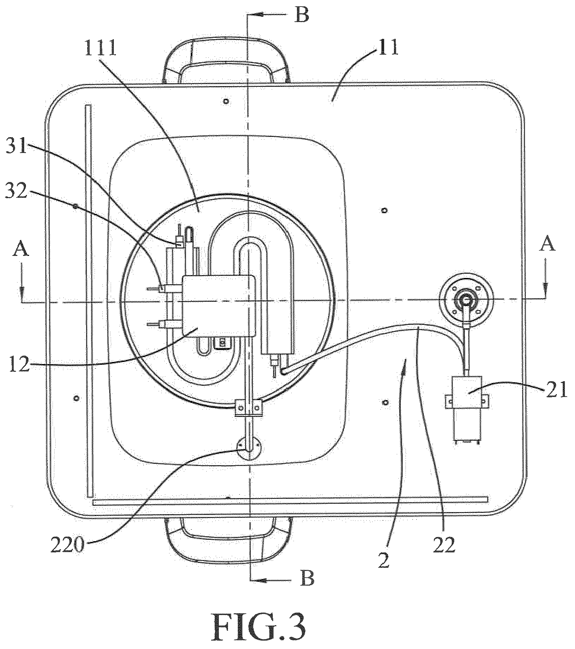

Referring to Figures 2 to 4, a cooking device according to an embodiment of the present disclosure includes a cooking unit 1, a water supply unit 2 and a heating unit 3. The cooking device is configured to be electrically connected to an external power source to actuate the water supply unit 2 and the heating unit 3 thereof.

The cooking unit 1 includes a mounting seat 11, an auxiliary mounting seat 12, a cooking pot 13 that is removably disposed on the mounting seat 11 and that defines a cooking space 133, a pot lid 14 removably disposed on the cooking pot 13 to openably cover the cooking space 133, and a water reservoir 15 disposed on the mounting seat 11 spaced apart from the cooking pot 13 for containing water. The mounting seat 11 has a heating wall 111 disposed below the cooking pot 13. The auxiliary mounting seat 12 is mounted to the mounting seat 11, and is located below and spaced apart from the heating wall 111. The cooking pot 13 includes a bottom wall 131 abutting against the heating wall 111, and a surrounding wall 132 extending upwardly from the bottom wall 131. The bottom and surrounding walls 131, 132 of the cooking pot 13 cooperatively define the cooking space 133. The bottom wall 131 has a first bottom wall section 134 adhered to the heating wall 111, and a second bottom wall section 135 connected to and surrounding the first bottom wall section 134. The first bottom wall section 134 is higher than the second bottom wall section 135. That is, the first bottom wall section 134 has a top surface higher than that of the second bottom wall section 135. In addition, the cooking unit 1 further includes an annular limiting seat 16 disposed on the mounting seat 11 and surrounding the surrounding wall 132 and the second bottom wall section 135 of the cooking pot 13 to prevent displacement of the first bottom wall section 134 of the cooking pot 13 from the heating wall 111 of the mounting seat 11. The annular limiting seat 16 has a generally L-shaped cross section.

The water supply unit 2 includes a water pump 21 mounted on a bottom portion of the water reservoir 15, a water pipe 22 connected to the water pump 21, and a steam guiding member 23 located in the cooking space 133 and connected to the water pipe 22. The water pump 21 can pump water from the water reservoir 15 to introduce the water into the water pipe 22 and can adjust the amount of water introduced into the same.

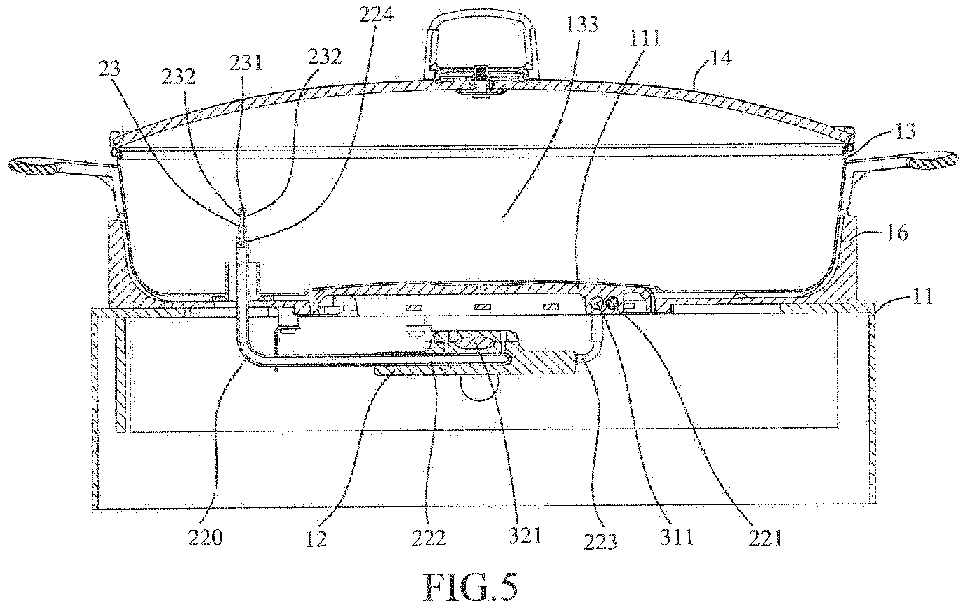

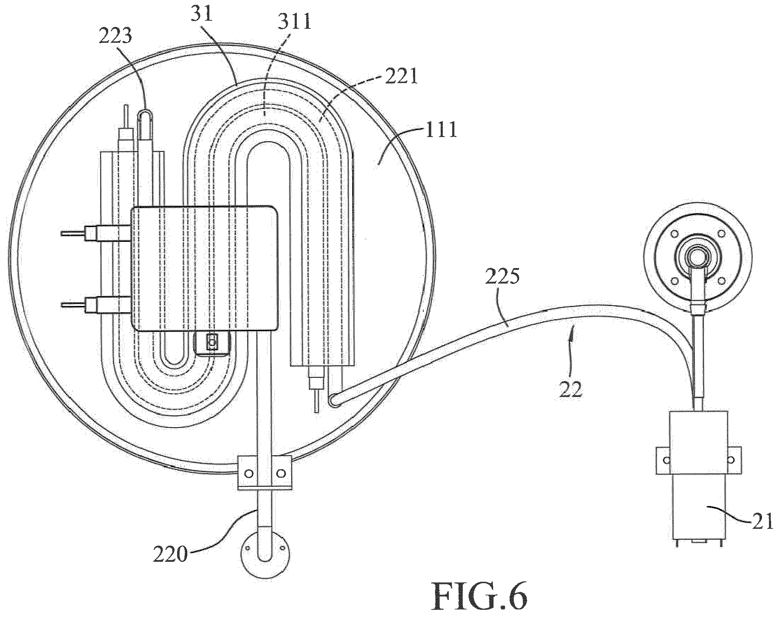

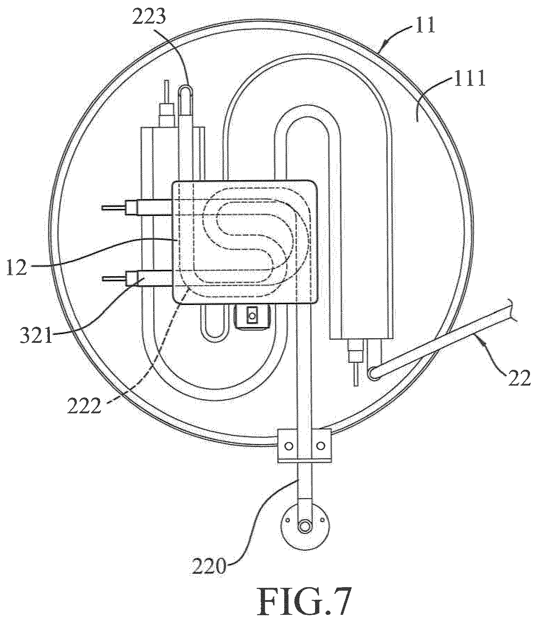

Referring to Figures 5 to 7, in combination with Figures 2 to 4, the water pipe 22 includes a pump-connection section 225 having one end connected to the water pump 21, a first pipe section 221 (indicated by dotted lines in Fig. 6) having one end connected to the other end of the pump-connection section 225 and extending around the heating wall 111 in a generally S-shaped manner, a second pipe section 222 (indicated by dotted lines in Fig. 7) that is mounted on and that extends curvedly around the auxiliary mounting seat 12 in a generally S-shaped manner, a pressurized pipe section 223 that is connected between the other end of the first pipe section 221 and one end of the second pipe section 222 and that has a diameter smaller than those of the first and second pipe sections 221, 222, and a generally L-shaped pipe section 220 having one end connected to the other end of the second pipe section 222 and an outlet end 224 opposite to the one end thereof. The outlet end 224 extends into the cooking space 133.

The steam guiding member 23 is connected to the outlet end 224, and has a peripheral surface formed with a plurality of spraying holes 232, and a closed end 231 formed on a top end of the peripheral surface. The spraying holes 232 are located higher than the first bottom wall section 134 of the cooking pot 13 and communicate with the outlet end 224.

The heating unit 3 includes a main heating module 31 mounted on the heating wall 111 of the mounting seat 11, and an auxiliary heating module 32 mounted on the auxiliary mounting seat 12 and spaced apart from the main heating module 31. The main heating module 31 has a main heating tube 311 (indicated by dotted lines in Fig. 6) extending around the heating wall 111 and corresponding to the first pipe section 221 in shape and position. That is, the main heating tube 311 also extends curvedly around the heating wall 111 in a generally S-shaped manner, and is disposed side by side with the first pipe section 221. The heating wall 111 and the first pipe section 221 can be simultaneously heated by heat generated by the main heating tube 311 when the main heating module 31 is energized.

The auxiliary heating module 32 has an auxiliary heating tube 321 (indicated by dotted lines in Fig. 7) extending around the auxiliary mounting seat 12 at a position corresponding to the second pipe section 222. Specifically, the auxiliary heating tube 321 is located on top of the second pipe section 222. The auxiliary heating tube 321 is spaced apart from the main heating tube 311, as best shown in Figure 5. The auxiliary heating tube 321 can heat the second pipe section 222 when it is energized. Because electrical heating technology is known in the art, a detailed description thereof is omitted herein for the sake of brevity.

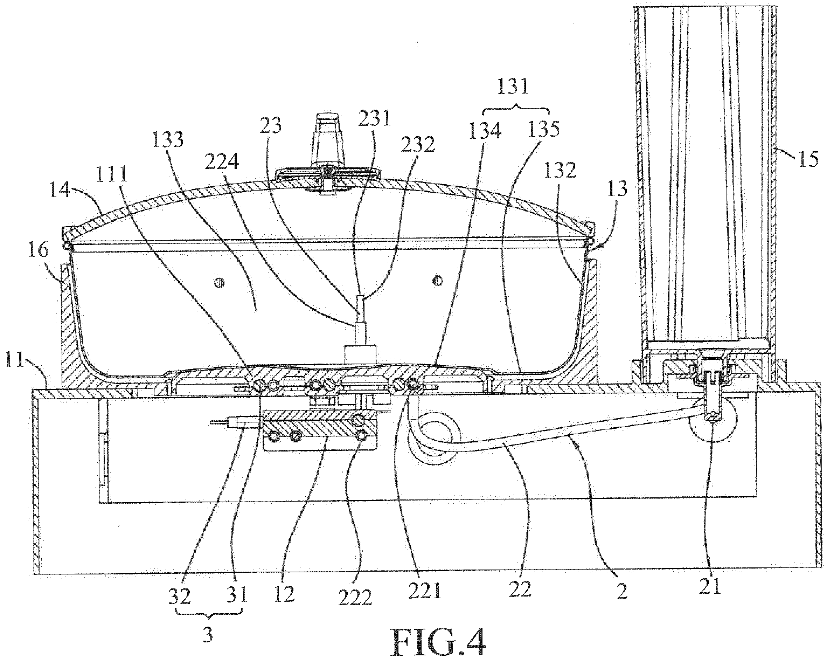

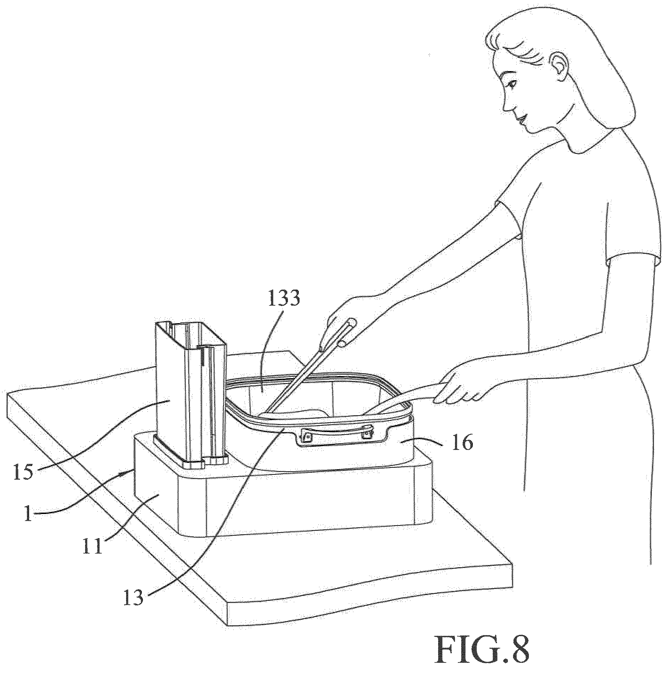

Referring to Figure 8, in combination with Figures 4 and 5, when the cooking device of the present disclosure is used for grilling food, the main heating module 31 is first actuated to heat the heating wall 111, and the first bottom wall section 134 of the cooking pot 13, which is adhered to the heating wall 111, is simultaneously heated by heat conduction. Afterwards, the food is disposed on the first bottom wall section 134 so as to be grilled. Because the first bottom wall section 134 is higher than the second bottom wall section 135, juices from the grilled food flow onto the second bottom wall section 135, thereby preventing the grilled food from being soaked by the juices which can adversely affect the taste of the grilled food. Hence, the quality of the grilled food is increased.

When the cooking device of the present disclosure is used for grilling and steaming food at the same time, the main heating module 31, the water pump 21 and the auxiliary heating module 32 are actuated. When the water pump 21 is actuated, water is pumped from the water reservoir 15 and is introduced into the water pipe 22. Because the first pipe section 221 is heated by the main heating module 31, when the water flows through the first pipe section 221, it is heated to form steam with a temperature ranging from 50°C to 100°C. As the steam flows continuously through the pressurized pipe section 223, the pressure and the boiling point thereof are increased due to the small diameter of the pressurized pipe section 223. The steam then enters the second pipe section 222 and is heated by the auxiliary heating module 32 to form superheated steam with a temperature ranging from 101°C to 250 °C . The superheated steam flows continuously through the L-shaped pipe section 220, and is uniformly sprayed into the cooking space 133 via the spraying holes 232 of the steam guiding member 23. Through this, the food in the cooking space 133 of the cookingpot 13 canbe simultaneously steamed and grilled. On one hand, the food can have a unique grilled flavor, and on the other hand, the food can be quickly heated by the superheated steam to retain the nutrients of and remove grease and salt from the food.

Moreover, during grilling and steaming of the food, only the main heating module 31 and the water pump 21 may be actuated. Because the auxiliary heating module 32 is not actuated, the steam flowing through the second pipe section 222 is not heated, and is directly sprayed into the cooking space 133 via the spraying holes 232 of the steam guiding member 23. However, in this case, the temperature of the steam for grilling and steaming food is low, and is suitable for cooking food that does not need high temperature.

It is worth to mention that the cooking device of the present disclosure may also be used for steaming food only. In this case, only the water pump 21 and the auxiliary heating module 32 are actuated. Because the main heating module 32 is not actuated, when the water flows through the first pipe section 221, it is not heated. As the water flows continuously through the second pipe section 222, it is heated by the auxiliary heating module 32 to form steam. The steam is sprayed into the cooking space 133 via the spraying holes 232. Through this, the food is only steamed in the cooking space 133 to retain the nutrients and remove grease and salt therefrom.

Besides, during steaming and grilling of the food, the amount of water pumped by the water pump 21 can be adjusted to control the amount of steam sprayed into the cooking space 133, thereby adjusting the temperature of the cooking space 133. For example, if the amount of water pumped by the water pipe 22 is large, the amount of the steam sprayed into the cooking space 133 is also large, thereby indirectly increasing the temperature of the cooking space 133. Because the cooking temperature can be adjusted according to the different types of food or different taste preferences, the use of the cooking device of this disclosure is quite easy and practical. During use of the cooking device of this disclosure, only the pot lid 14 is moved to cover or uncover the cooking space 133 so as to facilitate putting of the food into or removing the same from the cooking space 133 of the cooking pot 13. There is no need to move the mounting seat 11, the auxiliary mounting seat 12, the water supply unit 2 and the heating unit 3, so that improper handling of the same by a user can be prevented, , thereby reducing the damage risk of the water supply unit 2 and the heating unit 3.

In some embodiments, the heating wall 111 may be omitted from the mounting seat 11. In this case, the first pipe section 221 and the main heating tube 311 may be curvedly and directly adhered to the first bottom wall section 134 of the cooking pot 13, so that the main heating tube 311 may directly heat the first bottom wall section 134 and does not have to indirectly heat the first bottom wall section 134 through the heating wall 111, thereby increasing heating efficiency thereof.

To sum up, with the main heating tube 311 of the main heating module 31 simultaneously heating the heating wall 111 of the mounting seat 11 and the first pipe section 221, the cooking device of the present disclosure can grill and steam the food simultaneously, so that the nutrients of the food is retained and grease and salt are removed from the food. Thus, the food cooked using the cooking device of this disclosure is healthy to eat. Further, because there is no need to move the mounting seat 11, the auxiliary mounting seat 12, the water supply unit 2 and the heating unit 3 during use of the cooking device of this disclosure, the risk of being damaged thereof can be prevented. Moreover, the cooking device of this disclosure can provide different method of cooking the food, for example, steaming, grilling or simultaneously steaming and grilling the food.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A cooking device, comprising:
a cooking unit (1) defining a cooking space (133);
a water supply unit (2) including a water pipe (22) that is mounted on said cooking unit (1) and that has an outlet end (224) located in said cooking space (133); and
a heating unit (3) mounted on said cooking unit (1) and simultaneously heating said cooking unit (1) and said water pipe (22);
wherein said outlet end (224) of said water pipe (22) is configured to spray steam into said cooking space (133) when said water pipe (22) is heated by said heating unit (3).

2. The cooking device as claimed in Claim 1, wherein:
said heating unit (3) includes a main heating module (31) mounted on said cooking unit (1) below said cooking space (133), and an auxiliary heating module (32) mounted on said cooking unit (1) spaced apart from said main heating module (31);
said water pipe (22) includes a first pipe section (221) disposed in a position corresponding to said main heating module (31), and a second pipe section (222) disposed in a position corresponding to said auxiliary heating module (32);
said outlet end (224) is provided on said second pipe section (222);
said first pipe section (221) is heated by said mainheatingmodule (31) whensaidmainheatingmodule (31) is actuated; and
said second pipe section (222) is heated by said auxiliary heating module (32) when said auxiliary heating module (32) is actuated.

3. The cooking device as claimed in Claim 2, wherein:
said main heating module (31) has a main heating tube (311) curvedly disposed on said cooking unit (1);
said first pipe section (221) of said water pipe (22) has a shape and position corresponding to a shape and position of said main heating tube (311);
said auxiliary heating module (32) has an auxiliary heating tube (321) curvedly disposed on said cooking unit (1) and spaced apart from said main heating tube (311); and
said second pipe section (222) of said water pipe (22) is disposed at a position corresponding to that of said auxiliary heating tube (321).

4. The cooking device as claimed in Claim 2, wherein said water pipe (22) further includes a pressurized pipe section (223) that is connected between said first and second pipe sections (221, 222) and that has a diameter smaller than those of said first and second pipe sections (221, 222).

5. The cooking device as claimed in Claim 2, wherein said cooking unit (1) includes a mounting seat (11), a cooking pot (13) that is removably disposed on said mounting seat (11) and that defines said cooking space (133), and a pot lid (14) removably disposed on said cooking pot (13) to openably cover said cooking space (133), said heating unit (3) being mounted on said mounting seat (11) below said cooking pot (13).

6. The cooking device as claimed in Claim 5, wherein said mounting seat (11) has a heating wall (111), said cooking pot (13) including a bottom wall (131) abutting against said heating wall (111), said cooking unit (1) further including an auxiliary mounting seat (12) disposed below and spaced apart from said heating wall (111), said main heating module (31) and said first pipe section (221) being mounted on said heating wall (111), said auxiliary heating module (32) and said second pipe section (222) being mounted on said auxiliary mounting seat (12).

7. The cooking device as claimed in Claim 6, wherein said cooking pot (13) further includes a surrounding wall (132) extending upwardly from said bottom wall (131), said bottom and surrounding walls (131, 132) of said cooking pot (13) cooperatively defining said cooking space (133), said bottom wall (131) having a first bottom wall section (134) adhered to said heating wall (111), and a second bottom wall section (135) connected to and surrounding said first bottom wall section (134), said first bottom wall section (134) being higher than said second bottom wall section (135).

8. The cooking device as claimed in Claim 7, wherein said water pipe (22) further includes a steam guiding member (23) connected to said outlet end (224), said steam guiding member (23) having a peripheral surface formed with a plurality of spraying holes (232), and a closed end (231) formed on a top end of said peripheral surface, said spraying holes (232) being located higher than said first bottom wall section (134) of said cooking pot (13) and communicating with said outlet end (224) for spraying steam from said outlet end (224) into said cooking space (133).

9. The cooking device as claimed in Claim 1, wherein said water supply unit (2) further includes a water pump (21) connected to said water pipe for adjusting an amount of water introduced into said water pipe (22).
